# EUROPEAN PATENT APPLICATION

(11) **EP 4 755 896 A1**
(43) Date of publication of application: **10.06.2026**
(21) Application number: 24916370.0
(22) Date of filing: 14.08.2024
(51) Int. Cl.: C07F 9/6571, H01M 10/0567, H01M 10/052, H01M 10/0525, H01M 10/054

(54) **DIFLUOROBIS(OXALATO)PHOSPHATE COMPOSITION, AND PREPARATION METHOD THEREFOR AND USE THEREOF**

(30) Priority: 12.01.2024 CN 202410046325
(71) Applicant: Shanghai Rolechem Co., Ltd., Shanghai 201204 (CN); Rolechem (Jiangsu) Co., Ltd., Suzhou, Jiangsu 215635 (CN)
(72) Inventor: LIU, Jun, Shanghai 201204 (CN); TAN, Hanqing, Shanghai 201204 (CN); WEI, Fanjie, Shanghai 201204 (CN)
(74) Representative: Canzler & Bergmeier Patentanwälte Partnerschaft mbB
(86) International application number: PCT/CN2024/112201
(87) International publication number: WO 2025/148316

(57) **Abstract**

The present invention relates to the technical field of battery electrolyte additives, and in particular to a difluorobis(oxalato)phosphate composition, and a preparation method therefor and a use thereof. The chemical formula of the composition is: MPF₂(C₂O₄)₂·xB, wherein M is an alkali metal, B is an organic solvent, X is a molar ratio, and 0.05<x<1.1. The difluorobis(oxalato)phosphate composition obtained by the present invention has good fluidity and is more suitable for being fed in the process of preparing an electrolyte. Compared with difluorobis(oxalato)phosphate, the yield and product quality of the prepared difluorobis(oxalato)phosphate composition are higher, and the content of impurities in the prepared composition is low.

## Description

### FIELD OF TECHNOLOGY

The present disclosure relates to the technical field of battery electrolyte additives, in particular to a difluorobis(oxalato)phosphate salt composition, a preparation method therefor, and a use thereof.

### BACKGROUND

Common difluorobis(oxalato)phosphate salts include lithium difluorobis(oxalato)phosphate (LiDFOP) and sodium difluorobis(oxalato)phosphate (NaDFOP). LiDFOP is generally used as a nonaqueous electrolyte additive for lithium-ion batteries or lithium-ion capacitors. After the addition of LiDFOP, the electrolyte exhibits excellent high-temperature stability, and allows the formation of a more stable solid electrolyte interface (SEI) film on the surface of the positive electrode material, thereby enhancing the battery's cycling performance. NaDFOP is an important additive in sodium-ion battery electrolytes. It readily dissociates to enhance electrolyte conductivity, exhibits good antioxidation, thermal, and chemical stability, and provides reduction stability. Due to these advantages, difluorobis(oxalato)phosphate salts exhibit excellent potential for application in batteries.

In the prior art, many methods for preparing LiDFOP have been reported. For example, Japanese patent JP2010143835A discloses a method for preparing a LiDFOP solution from lithium hexafluorophosphate, silicon tetrachloride, and oxalic acid. This method has a rapid reaction speed, and employs inexpensive and readily available raw materials. However, the use of silicon tetrachloride may introduce excessive chloride ions into the final product. Furthermore, as the product is in solution form, unreacted oxalic acid is difficult to remove, resulting in elevated acidity in the final product. South Korean patent KR101395663B1 discloses a method for preparing LiDFOP by reacting lithium hexafluorophosphate with bis(trialkylsilyl) oxalate. This method proceeds under mild reaction conditions, avoids the introduction of chloride ions, and allows for facile purification of the product. However, the raw materials are not easily accessible, the economic efficiency is limited, and the low reactivity of the raw materials results in extended reaction times. Furthermore, the obtained product is a mixture of LiDFOP and lithium tetrafluoro(oxalato)phosphate. Chinese patent CN108910919A discloses a method for preparing LiDFOP using hexamethyldisilazane, oxalic acid, and lithium hexafluorophosphate as raw materials. A drawback of this method is the generation of stoichiometric amounts of ammonia, which may react with the product and cause side reactions. Chinese patent CN110845539A discloses a method in which lithium hexafluorophosphate and ammonium oxalate are reacted in a non-protic organic solvent, followed by direct conversion to obtain a LiDFOP solution without introducing additional substances. Nevertheless, this method suffers from potential side reactions involving ammonium compounds and the raw materials or product, leading to reduced product purity and limiting the practical applicability of the method.

It is evident that, in practical industrial applications, in addition to pursuing processes with low cost and high yield, there is a growing attention on the purity and performance of the final products. Conventional purification methods for LiDFOP generally involve recrystallization, through which a wet LiDFOP product is obtained. The wet cake is subsequently subjected to high-temperature drying to remove residual solvent. However, LiDFOP powder obtained by such high-temperature drying typically lacks a well-defined crystal structure, which exhibits poor flowability during the electrolyte preparation process, leading to challenges in material feeding. Additionally, conventional methods often fail to achieve satisfactory yield and purity.

### SUMMARY

In a first aspect, the present disclosure provides a difluorobis(oxalato)phosphate salt composition. The chemical formula of the composition is MPF₂(C₂O₄)₂·xB, where M is an alkali metal, B is an organic solvent, and x is the molar ratio of the organic solvent B to the difluorobis(oxalato)phosphate salt, with 0.05 < x < 1.1.

In a second aspect, the present disclosure provides a method for preparing the difluorobis(oxalato)phosphate salt composition described above. The method includes adding a poor solvent to a mixture of a difluorobis(oxalato)phosphate salt and an organic solvent to induce crystallization, followed by filtering to obtain a filter cake, and then drying to yield the difluorobis(oxalato)phosphate salt composition.

In a third aspect, the present disclosure provides a use of the difluorobis(oxalato)phosphate salt composition described above in an electrolyte.

In a fourth aspect, the present disclosure provides a use of the difluorobis(oxalato)phosphate salt composition described above in a battery.

The present disclosure has the following beneficial effects.

The difluorobis(oxalato)phosphate salt composition of the present disclosure has good flowability, making it suitable for feeding during the electrolyte preparation process. Compared to difluorobis(oxalato)phosphate salt, the difluorobis(oxalato)phosphate salt composition prepared by the method of the present disclosure offers higher yields and better product quality, with lower impurity content in the resulting composition.

### BRIEF DESCRIPTION OF THE DRAWINGS

FIG. 1 is a fluorine spectrum of the product LiPF₂(C₂O₄)₂·xDMC (x=1.002) prepared in Example 6 of the present disclosure.
FIG. 2 is a proton spectrum of the product LiPF₂(C₂O₄)₂·xDMC (x=1.002) prepared in Example 6 of the present disclosure.
FIG. 3 is a carbon spectrum of the product LiPF₂(C₂O₄)₂·xDMC (x=1.002) prepared in Example 6 of the present disclosure.
FIG. 4 is a fluorine spectrum of the product LiPF₂(C₂O₄)₂·xEC (x=1.074) prepared in Example 3 of the present disclosure.
FIG. 5 is a proton spectrum of the product LiPF₂(C₂O₄)₂·xEC (x=1.074) prepared in Example 3 of the present disclosure.
FIG. 6 is a carbon spectrum of the product LiPF₂(C₂O₄)₂·xEC (x=1.074) prepared in Example 3 of the present disclosure.
FIG. 7 is a fluorine spectrum of the product LiPF₂(C₂O₄)₂·0.501DMC·0.510EC (x=1.011) prepared in Example 9 of the present disclosure.
FIG. 8 is a proton spectrum of the product LiPF₂(C₂O₄)₂·0.501DMC·0.510EC (x=1.011) prepared in Example 9 of the present disclosure.
FIG. 9 is a carbon spectrum of the product LiPF₂(C₂O₄)₂·0.501DMC·0.510EC (x=1.011) prepared in Example 9 of the present disclosure.
FIG. 10 is a fluorine spectrum of the product NaPF₂(C₂O₄)₂·0.889DMC·0.102EC (x=0.991) prepared in Example 10 of the present disclosure.
FIG. 11 is a proton spectrum of the product NaPF₂(C₂O₄)₂·0.889DMC·0.102EC (x=0.991) prepared in Example 10 of the present disclosure.
FIG. 12 is a carbon spectrum of the product NaPF₂(C₂O₄)₂·0.889DMC·0.102EC (x=0.991) prepared in Example 10 of the present disclosure.
FIG. 13 is a fluorine spectrum of the product LiPF₂(C₂O₄)₂·0.112DMC·1.002EC (x=1.114) prepared in Example 11 of the present disclosure.
FIG. 14 is a proton spectrum of the product LiPF₂(C₂O₄)₂·0.112DMC·1.002EC (x=1.114) prepared in Example 11 of the present disclosure.
FIG. 15 is a carbon spectrum of the product LiPF₂(C₂O₄)₂·0.112DMC·1.002EC (x=1.114) prepared in Example 11 of the present disclosure.

### DETAILED DESCRIPTION

The following provides a detailed description of the embodiments of the present disclosure, including a difluorobis(oxalato)phosphate salt composition, a preparation method therefor, and a use thereof. However, unnecessary detailed descriptions will be omitted, such as those for well-known matters or redundant explanations for identical structures. This is done to avoid making the following descriptions unnecessarily lengthy and to facilitate the understanding of those skilled in the art. Additionally, the figures and the following descriptions are provided to help those skilled in the art fully understand the present disclosure and are not intended to limit the scope of the claims.

In the present disclosure, the "range" is defined in terms of lower and upper limits. The given range is defined by selecting a lower limit and an upper limit, which together set the boundaries for a specific range. The range may be inclusive or exclusive of the boundary values and can be combined arbitrarily, meaning any lower limit can be paired with any upper limit to form a range. For example, if a range of 60-120 and 80-110 is listed for a specific parameter, the ranges 60-110 and 80-120 are also anticipated. Furthermore, if the minimum range values 1 and 2, and the maximum range values 3, 4, and 5 are listed, the following ranges are all anticipated: 1-3, 1-4, 1-5, 2-3, 2-4, and 2-5. In the present disclosure, unless otherwise specified, the numerical range "a-b" refers to any real number combination between a and b, where a and b are real numbers. For example, the range "0-5" represents all real numbers between 0 and 5, and "0-5" is just an abbreviated expression for these numerical combinations. Additionally, if a parameter is stated as an integer ≥2, it refers to the integers 2, 3, 4, 5, 6, 7, 8, 9, 10, 11, 12, etc.

Unless otherwise specified, all embodiments and optional embodiments of the present disclosure may be combined to form new technical solutions.

Unless otherwise specified, all technical features and optional technical features of the present disclosure may be combined to form new technical solutions.

Unless otherwise specified, the terms "include" and "comprise" used in the present disclosure may be open-ended or closed-ended. For instance, "include" and "comprise" may indicate that other components not listed may also be included or may indicate that only the listed components are included.

The present disclosure provides a difluorobis(oxalato)phosphate salt composition, a method for preparing it, and its use in electrolytes and batteries. The method for preparing difluorobis(oxalato)phosphate salt composition includes: adding a poor solvent to a mixture of a difluorobis(oxalato)phosphate salt and an organic solvent to induce crystallization, followed by filtering to obtain a filter cake, and then drying to yield the difluorobis(oxalato)phosphate salt composition. The resulting difluorobis(oxalato)phosphate salt composition is a solid and, compared to the powdery difluorobis(oxalato)phosphate salt, has good flowability, higher yield, and better product quality, with lower impurity content.

### Difluorobis(oxalato)phosphate salt composition

The present disclosure provides a difluorobis(oxalato)phosphate salt composition, the chemical formula of which is: MPF₂(C₂O₄)₂·xB. The composition is an organic-solvent solvate crystal of difluorobis(oxalato)phosphate salt, which is prepared by cooling crystallization of a mixture of difluorobis(oxalato)phosphate and an organic solvent, followed by filtering to obtain a filter cake, and then drying.

In the chemical formula of the composition, M represents an alkali metal, preferably, M is Li or Na.

In the chemical formula of the composition, B represents an organic solvent. Optionally, B is one or more of dimethyl carbonate (DMC) and ethylene carbonate (EC). Preferably, B is DMC or EC.

In the chemical formula of the composition, x represents the molar ratio of the organic solvent B to the difluorobis(oxalato)phosphate salt, with 0.05 < x < 1.1. Optionally, x may be in the range of: 0.5 ≤ x ≤ 1, 0.05 < x < 0.1, 0.1 < x < 0.5, 0.5 < x < 0.8, 0.8 < x < 1.1, 0.1 < x < 0.2, 0.2 < x < 0.3, 0.3 < x < 0.4, 0.4 < x < 0.5, 0.5 < x < 0.6, 0.6 < x < 0.7, 0.7 < x < 0.8, 0.8 < x < 0.9, 0.9 < x < 1.0, or 1.0 < x < 1.1, etc. Preferably, x may be in the range of 0.5 ≤ x ≤ 1, and more preferably, x = 1, at which the difluorobis(oxalato)phosphate salt composition exhibits the highest purity and yield. When x = 1, the composition is a crystal complex where the metal compound MPF₂(C₂O₄)₂ and the solvent are chemically bonded together, exhibiting a defined crystal structure. When x ≠ 1, the composition contains both complexed molecules and free solvent molecules, or the composition contains both complexed molecules and difluorobis(oxalato)phosphate salt. According to embodiments of the present disclosure, when x > 1, the composition includes a complex MPF₂(C₂O₄)₂·EC/DMC along with free solvent molecules; when x < 1, the final product includes a mixture of MPF₂(C₂O₄)₂·EC/DMC and MPF₂(C₂O₄)₂. The value of x can be regulated by adjusting the reaction conditions, as described in the preparation method section below.

In some embodiments, the chemical formula of the composition is MPF₂(C₂O₄)₂·x(DMC/EC), where M is Li or Na, DMC is dimethyl carbonate, EC is ethylene carbonate, and x is the molar ratio of DMC/EC to MPF₂(C₂O₄)₂, with 0.05 < x < 1.1. Optionally, x may be in a range of: 0.5 ≤ x ≤ 1, 0.05 < x < 0.1, 0.1 < x < 0.5, 0.5 < x < 0.8, 0.8 < x < 1.1, 0.1 < x < 0.2, 0.2 < x < 0.3, 0.3 < x < 0.4, 0.4 < x < 0.5, 0.5 < x < 0.6, 0.6 < x < 0.7, 0.7 < x < 0.8, 0.8 < x < 0.9, 0.9 < x < 1.0, or 1.0 < x < 1.1. Preferably, x may be in a range of 0.5 ≤ x ≤ 1, and more preferably, x = 1.

In some embodiments, the chemical formula of the composition may be LiPF₂(C₂O₄)₂·x(DMC/EC) or NaPF₂(C₂O₄)₂·x(DMC/EC), where DMC is dimethyl carbonate, EC is ethylene carbonate. DMC or EC may each serve as a single ligand to coordinate with difluorobis(oxalato)phosphate salt, or DMC and EC may simultaneously act as ligands to coordinate with difluorobis(oxalato)phosphate salt.

When DMC and EC simultaneously act as ligands, x represents the molar ratio of the total molar amount of DMC and EC to MPF₂(C₂O₄)₂, with 0.05 < x < 1.1. Optionally, x may be in a range of: 0.3 < x < 1.1, 0.5 ≤ x ≤ 1, 0.05 < x < 0.1, 0.1 < x < 0.5, 0.5 < x < 0.8, 0.8 < x < 1.1, 0.1 < x < 0.2, 0.2 < x < 0.3, 0.3 < x < 0.4, 0.4 < x < 0.5, 0.5 < x < 0.6, 0.6 < x < 0.7, 0.7 < x < 0.8, 0.8 < x < 0.9, 0.9 < x < 1.0, or 1.0 < x < 1.1. Preferably, x may be in a range of 0.5 ≤ x ≤ 1, and more preferably, x = 1.

In some embodiments, the chemical formula of the composition may be any one of the following: MPF₂(C₂O₄)₂·1.0DMC·0.1EC, MPF₂(C₂O₄)₂·0.9DMC·0.1EC, MPF₂(C₂O₄)₂·0.8DMC·0.1EC, MPF₂(C₂O₄)₂·0.8DMC·0.2EC, MPF₂(C₂O₄)₂·0.7DMC·0.2EC, MPF₂(C₂O₄)₂·0.6DMC·0.2EC, MPF₂(C₂O₄)₂·0.6DMC·0.3EC, MPF₂(C₂O₄)₂·0.5DMC·0.3EC, MPF₂(C₂O₄)₂·0.5DMC·0.4EC, MPF₂(C₂O₄)₂·0.4DMC·0.4EC, MPF₂(C₂O₄)₂·0.4DMC·0.5EC, MPF₂(C₂O₄)₂·0.5DMC·0.5EC, MPF₂(C₂O₄)₂·0.4DMC·0.3EC, MPF₂(C₂O₄)₂·0.4DMC·0.2EC, MPF₂(C₂O₄)₂·0.3DMC·0.5EC, MPF₂(C₂O₄)₂·0.3DMC·0.6EC, MPF₂(C₂O₄)₂·0.3DMC·0.7EC, MPF₂(C₂O₄)₂·0.2DMC·0.3EC, MPF₂(C₂O₄)₂·0.2DMC·0.5EC, MPF₂(C₂O₄)₂·0.2DMC·0.7EC, MPF₂(C₂O₄)₂·0.2DMC·0.8EC, MPF₂(C₂O₄)₂·0.1DMC·0.1EC, MPF₂(C₂O₄)₂·0.1DMC·0.5EC, MPF₂(C₂O₄)₂·0.1DMC·0.7EC, and MPF₂(C₂O₄)₂·0.1DMC·0.9EC. Where M is Li or Na.

In some embodiments, the chemical formula of the composition may be LiPF₂(C₂O₄)₂·xDMC, LiPF₂(C₂O₄)₂·xEC, NaPF₂(C₂O₄)₂·xDMC, or NaPF₂(C₂O₄)₂·xEC, where DMC is dimethyl carbonate, EC is ethylene carbonate, and x represents the molar ratio of DMC/EC to MPF₂(C₂O₄)₂, with 0.05 < x < 1.1. Optionally, x may be in a range of: 0.3 < x < 1.1, 0.5 ≤ x ≤ 1, 0.05 < x < 0.1, 0.1 < x < 0.5, 0.5 < x < 0.8, 0.8 < x < 1.1, 0.1 < x < 0.2, 0.2 < x < 0.3, 0.3 < x < 0.4, 0.4 < x < 0.5, 0.5 < x < 0.6, 0.6 < x < 0.7, 0.7 < x < 0.8, 0.8 < x < 0.9, 0.9 < x < 1.0, or 1.0 < x < 1.1, etc. Preferably, x may be in a range of 0.5 ≤ x ≤ 1, and more preferably, x = 1, at which the difluorobis(oxalato)phosphate salt composition exhibits the highest purity and yield.

### Preparation Method of the Difluorobis(oxalato)phosphate salt composition

The present disclosure also provides a method for preparing the difluorobis(oxalato)phosphate salt composition described above. The method includes the following steps: adding a poor solvent to a mixture of a difluorobis(oxalato)phosphate salt and an organic solvent to induce crystallization, followed by filtering to obtain a filter cake, and then drying to yield the difluorobis(oxalato)phosphate salt composition.

The mixture of a difluorobis(oxalato)phosphate salt and an organic solvent can be obtained through various approaches. The following methods are provided by way of example only.

Method 1: The mixture of a difluorobis(oxalato)phosphate salt and an organic solvent may be obtained by combining the difluorobis(oxalato)phosphate salt and the organic solvent. For example, the difluorobis(oxalato)phosphate salt and the organic solvent may be refluxed at a predetermined temperature (e.g., 60°C to 100°C) for salt dissolution, followed by hot filtration to remove mechanical impurities, to obtain the mixture.

Method 2: The mixture of a difluorobis(oxalato)phosphate salt and an organic solvent may be obtained during the preparation of the difluorobis(oxalato)phosphate salt. For example, adding a hexafluorophosphate salt and anhydrous oxalic acid to a first organic solvent, and performing heating; then dropwise adding silicon tetrachloride or a solution containing silicon tetrachloride and a second organic solvent; followed by maintaining the mixture at an elevated temperature and stirring, during which gaseous SiF₄ and hydrogen chloride are generated; performing ¹⁹F-NMR analysis to determine whether the hexafluorophosphate salt has completely reacted, cooling the reaction system to room temperature, and filtering off any residual insoluble matter; concentrating the filtrate under reduced pressure, optionally to form a viscous, translucent solid-liquid mixture; and subsequently adding a third organic solvent to dissolve the solid-liquid mixture.

In Method 2, the heating temperature may range from 20°C to 70°C; the dropwise addition time may range from 1 to 12 hours; the holding temperature may range from 20°C to 70°C; and the holding time may range from 3 to 6 hours. The hexafluorophosphate salt may be, for example, lithium hexafluorophosphate or sodium hexafluorophosphate. The concentration of the filtrate may be carried out at a temperature ranging from 20°C to 80°C.

In Method 2, the molar ratio of silicon tetrachloride to hexafluorophosphate salt may be in a range of 1:(1-1.1), and the molar ratio of anhydrous oxalic acid to hexafluorophosphate salt may be in a range of 2:(1-1.1).

In the method of the present disclosure, the mass ratio of organic solvent to difluorobis(oxalato)phosphate salt in the mixture of the difluorobis(oxalato)phosphate salt and the organic solvent may be in a range of 1:(1-5). Optionally, the mass ratio may be in a range of 1:(1-1.67), 1:(1.67-5), 1:(1-3), 1:(3-5), 1:(1-2), 1:(2-3), 1:(3-4), or 1:(4-5). If the amount of organic solvent is too low, dissolution of the difluorobis(oxalato)phosphate salt will be insufficient; if the amount of organic solvent is too high, the cost increases and the process becomes uneconomical.

In the method of the present disclosure, the mass ratio of difluorobis(oxalato)phosphate salt to the poor solvent may be in a range of 1:(1-10). Optionally, the mass ratio may be in a range of 1:(1-5), 1:(5-10), 1:(1-3), 1:(3-5), 1:(5-8), 1:(8-10), 1:(1-2), 1:(2-3), 1:(3-4), 1:(4-5), 1:(5-6), 1:(6-7), 1:(7-8), 1:(8-9) or 1:(9-10), etc. An insufficient amount of the poor solvent may reduce the yield and result in incomplete crystallization, whereas an excessive amount of the poor solvent may compromise product quality and introduce additional impurities.

In the method of the present disclosure, the difluorobis(oxalato)phosphate salt is LiDFOP or NaDFOP.

In the method of the present disclosure, the organic solvent may include one or more of dimethyl carbonate (DMC), ethylene carbonate (EC), and one or more additional organic solvents. The organic solvent serves as a good solvent, which includes at least DMC or EC, and additional good solvents may also be used during the preparation of the composition. However, only DMC and/or EC will be incorporated into the resulting solid composition. The additional organic solvents may include one or more of methyl ethyl carbonate, diethyl carbonate, propylene carbonate, acetonitrile, tetrahydrofuran, ethylene glycol dimethyl ether, diethylene glycol dimethyl ether, diethylene glycol diethyl ether, and dioxane. Preferably, the organic solvent is DMC and/or EC. In the present disclosure, if only the addtional solvents are used without DMC or EC, it is impossible to obtain a solid composition, or the obtained composition is unstable. For example, when only methyl ethyl carbonate is used as the organic solvent, although a composition can be obtained, the volatility of methyl ethyl carbonate causes gradual weight loss of the product, adversely affecting product quality and storage stability. The composition obtained by the present disclosure is stable under normal temperature and pressure and is easy to store.

In the method of the present disclosure, the poor solvent is a hydrocarbon solvent and/or a halogenated hydrocarbon solvent. Optionally, the poor solvent is one or more of benzene, toluene, o-xylene, m-xylene, p-xylene, chlorobenzene, o-dichlorobenzene, m-dichlorobenzene, p-dichlorobenzene, hexane, heptane, octane, dichloromethane, trichloromethane, carbon tetrachloride, 1,2-dichloroethane, 1,1-dichloroethane, 1,1,2-trichloroethane, tetrachloroethane, tetrachloroethylene, 1,2,3-trichloropropane, n-butyl ether, and diisopropyl ether.

Optionally, the hydrocarbon solvent is one or more of n-hexane, cyclohexane, n-heptane, n-octane, petroleum ether, toluene, and xylene. Preferably, the hydrocarbon solvent is one or more of petroleum ether, n-hexane, toluene, and o-xylene.

Optionally, the halogenated hydrocarbon solvent is one or more of dichloromethane, trichloromethane, 1,2-dichloroethane, 1,1,1-trichloroethane, 1,1,2-trichloroethane, 1,2,3-trichloropropane, 1,1,2,2-tetrachloroethane, 1,4-dichlorobutane, and 1,1,2,2-tetrachloroethylene. Preferably, the halogenated hydrocarbon solvent is one or more of 1,4-dichlorobutane, 1,2,3-trichloropropane, and 1,2-dichloroethane. The selection of the poor solvent is guided by considerations of cost-effectiveness, environmental friendliness, inherent stability, avoidance of introducing impurities, and ease of recovery and separation, thereby ensuring a high yield of the precipitated product.

In the method of the present disclosure, when adding the poor solvent the mixture of difluorobis(oxalato)phosphate salt and the organic solvent is continuously stirred, so as to allow crystallization to occur. The stirring time affects the rate of crystallization and is the most important factor determining the final x value in the product. The suitable stirring time may range from 1 to 12 hours. During the initial stage of stirring, a large amount of crystals precipitate. As stirring continues, part of the solvent is re-incorporated into the crystal lattice, forming a coordination complex with the metal compound under the appropriate crystallization temperature. If the stirring time is too short, crystals precipitate too rapidly, although some of the solvent may also be re-incorporated within the lattice, they can easily volatilize during subsequent drying and heating. In addition to stirring time, the crystallization temperature also affects the composition of the product. If the crystallization temperature is too low, crystals form too quickly, and impurities may co-precipitate. For example, ethylene carbonate, which has a melting point of 35-38°C, may solidify at low temperatures. The crystallization temperature may range from 10°C to 75°C. Optionally, the crystallization temperature may range from 10°C-45°C, 45°C-50°C, 50°C-75°C, 45°C-70°C, 70°C-75°C, 45°C-60°C, 60°C-75°C, 45°C-55°C, 55°C-65°C, or 65°C-75°C. To save energy, crystallization is typically performed at lower temperatures; however, excessively low temperatures may lead to co-crystallization of impurities, negatively affecting product purity.

In the method of the present disclosure, drying is performed by conventional vacuum heating under an inert gas atmosphere, in which the moisture content is maintained below 10 ppm. Any standard drying technique known in the art may be employed.

Furthermore, the temperature for vacuum heating may range from 20°C to 90°C. Optionally, the temperature for vacuum heating may range from 20°C to 50°C, 50°C to 90°C, 20°C to 70°C, 70°C to 90°C, 20°C to 30°C, 30°C to 50°C, or 50°C to 90°C. Preferably, the temperature for vacuum heating ranges from 30°C to 50°C. The heating temperature should not be excessively high, as elevated temperatures may cause solvent molecules to escape. Even if the partially coordinated metal composition is obtained at an earlier stage or a portion of the solvent remains incorporated in the crystal lattice, prolonged high-temperature drying can still result in the complete volatilization of solvent, ultimately yielding the solvent-free metal compound MPF₂(C₂O₄)₂.

Furthermore, the pressure during vacuum heating may range from 0 Pa to 20,000 Pa. Optionally, the pressure during vacuum heating may range from 0 Pa to 10,000 Pa, 10,000 Pa to 20,000 Pa, 0 Pa to 5,000 Pa, 5,000 Pa to 10,000 Pa, 10,000 Pa to 15,000 Pa, 15,000 Pa to 20,000 Pa, 0 Pa to 200 Pa, 200 Pa to 5,000 Pa, 200 Pa to 10,000 Pa, 200 Pa to 20,000 Pa, 0 Pa to 500 Pa, 500 Pa to 5,000 Pa, 500 Pa to 10,000 Pa, 500 Pa to 20,000 Pa, etc.

### Use

The present disclosure also provides uses of the difluorobis(oxalato)phosphate salt composition described above in electrolytes and batteries.

In some embodiments, any of the difluorobis(oxalato)phosphate salt compositions described herein may be used as an additive in the preparation of electrolytes for electrochemical devices. The electrolyte additive may be prepared by various methods, for example, by mixing any of the lithium difluorobis(oxalato)phosphate compositions disclosed herein with one or more solvents, one or more diluents, and/or one or more additional additives. The solvents, diluents, and additional additives may be those known in the art. Furthermore, the electrolyte additive may consist solely of the pure lithium difluorobis(oxalato)phosphate composition.

The beneficial effects of the present disclosure will be further illustrated with reference to examples.

To further illustrate the objectives, technical solutions, and beneficial effects of the present disclosure, the following examples are provided. It should be understood, however, that these examples are for illustrative purposes only and are not intended to limit the scope of the present disclosure. The embodiments of the present disclosure are not restricted to the specific examples described herein. Unless otherwise specified, any experimental or operational conditions not explicitly stated in the examples are carried out under conventional conditions or according to the recommendations of the material suppliers.

Additionally, unless otherwise specified, one or more method steps recited in the present disclosure do not exclude the presence of additional method steps before and/or after the combined steps, nor do they exclude the insertion of other method steps between the expressly recited steps. Likewise, unless otherwise specified, the combined and connected relationship between one or more devices/apparatuses recited in the present disclosure does not exclude the presence of other devices/apparatuses before and/or after the recited devices/apparatuses, nor does it exclude the insertion of other devices/apparatuses between the two expressly recited devices/apparatuses. Furthermore, unless otherwise specified, the numbering of method steps is provided solely for convenience of reference and does not limit the order of execution or the scope of the present disclosure. Any rearrangement or modification of the step sequence that does not substantially alter the technical content shall also be considered within the scope of the present disclosure.

In the following examples, the reagents, materials, and instruments used are commercially available unless otherwise specified.

For solvents used in the present disclosure, unless otherwise specified, the moisture content should be ≤ 0.05%.

### Preparation Example 1

500 g of LiDFOP with an ion chromatography purity of 99% were added to 500 g of DMC. The mixture was heated to 90°C under reflux for dissolution, and then hot-filtered to remove mechanical impurities, thereby obtaining a LiDFOP in DMC solution (hereinafter referred to as a "LiDFOP/DMC solution").

### Preparation Example 2

500 g of NaDFOP with an ion chromatography purity of 99% were added to a mixed solvent including 200 g of EC and 100 g of acetonitrile. The mixture was heated to 60°C under reflux for dissolution, and then hot-filtered to remove mechanical impurities, thereby obtaining a NaDFOP in EC and acetonitrile solution (hereinafter referred to as a "NaDFOP/EC-acetonitrile solution").

### Preparation Example 3

At room temperature, 76.7 g (0.505 mol) of lithium hexafluorophosphate solid and 90.05 g (1.0 mol) of anhydrous oxalic acid were added to 1000 g of methyl ethyl carbonate. The mixture was heated to 45°C, and 84.95 g (0.5 mol) of silicon tetrachloride liquid was added dropwise over 2 hours. The reaction was maintained at 45-55°C for 4 hours, during which silicon tetrafluoride and hydrogen chloride gases were generated. ¹⁹F NMR analysis was performed to determine whether the lithium hexafluorophosphate in the reaction system had completely reacted. The reaction system was then cooled to room temperature, filtered to remove any insoluble residues, and then concentrated under reduced pressure at 50°C to obtain a viscous, translucent solid-liquid mixture. 80 g of EC were added to the viscous, translucent solid-liquid mixture, followed by heating to 90°C to achieve complete dissolution.

### Preparation Example 4

At room temperature, 152 g (1.0 mol) of lithium hexafluorophosphate solid and 180.1 g (2.0 mol) of anhydrous oxalic acid were added to 1000 g of DMC. The mixture was heated to 50°C, and a solution containing 169.9 g (1 mol) of silicon tetrachloride liquid and 500 g of DMC was added dropwise over 5 hours. The reaction was maintained at 40-50°C for 6 hours, during which silicon tetrafluoride and hydrogen chloride gases were generated. ¹⁹F NMR analysis was performed to determine whether the lithium hexafluorophosphate in the reaction system had fully reacted. The reaction system was then cooled to room temperature, filtered to remove any insoluble residues, and then concentrated under reduced pressure at 80°C to obtain a viscous, translucent solid-liquid mixture.

### Preparation Example 5

At room temperature, 168 g (1.0 mol) of sodium hexafluorophosphate solid and 180.1 g (2.0 mol) of anhydrous oxalic acid were added to a first mixture of 600 g of DMC and 500 g of ethylene glycol dimethyl ether, to obtain a second mixture. The second mixture was heated to 50°C, and a solution containing 169.9 g (1 mol) of silicon tetrachloride liquid and 500 g of DMC was added dropwise over 5 hours. The reaction was maintained at 40-50°C for 6 hours, during which silicon tetrafluoride and hydrogen chloride gases were generated. ¹⁹F NMR analysis was performed to determine whether the sodium hexafluorophosphate in the reaction system had fully reacted. The reaction system was then cooled to room temperature, filtered to remove any insoluble residues, and then concentrated under reduced pressure at 80°C to obtain a viscous, translucent solid-liquid mixture.

### Preparation Example 6

Under a nitrogen atmosphere, 1 mol of lithium tris(oxalato)phosphate and 1.1 mol of lithium tetrafluoro(oxalato)phosphate were added to 2000 g of DMC. The mixture was heated to 120°C for 5 hours to obtain a LiDFOP solution. The LiDFOP solution was cooled to room temperature, filtered to remove insolubles, and then concentrated under reduced pressure to yield a concentrated LiDFOP solution.

### Preparation Example 7

500 g of LiDFOP with an ion chromatography purity of 99% was added to a mixed solvent of 250 g of DMC and 250 g of EC. The mixture was heated to 90°C under reflux for dissolution, and then hot-filtered to remove mechanical impurities, thereby obtaining a LiDFOP in DMC and EC solution (hereinafter referred to as a "LiDFOP/DMC-EC solution").

### Preparation Example 8

500 g of NaDFOP with an ion chromatography purity of 99% was added to a mixed solvent of 180 g of DMC and 20 g of EC. The mixture was heated to 60°C under reflux for dissolution, and then hot-filtered to remove mechanical impurities, thereby obtaining a NaDFOP in DMC and EC solution (hereinafter referred to as a "NaDFOP/DMC-EC solution").

### Preparation Example 9

At room temperature, 76.7 g (0.505 mol) of lithium hexafluorophosphate solid and 90.05 g (1.0 mol) of anhydrous oxalic acid were added to 1000 g of methyl ethyl carbonate. The mixture was heated to 45°C, and 84.95 g (0.5 mol) of silicon tetrachloride liquid was added dropwise over 2 hours. The reaction was maintained at 45-55°C for 4 hours, during which silicon tetrafluoride and hydrogen chloride gases were generated. ¹⁹F NMR analysis was performed to determine whether the lithium hexafluorophosphate in the reaction system had fully reacted. The reaction system was then cooled to room temperature, filtered to remove any insoluble residues, and then concentrated under reduced pressure at 50°C to obtain a viscous, translucent solid-liquid mixture. 10 g of DMC and 90 g of EC were added to the viscous, translucent solid-liquid mixture, and followed by heating to 90°C to achieve complete dissolution.

### Example 1

1500 g of petroleum ether was added dropwise to the LiDFOP/DMC solution obtained in Preparation Example 1. The mixture was stirred for crystallization at 70°C for 3 hours. The wet crystals were separated and dried under a vacuum of 500 Pa at 50°C, yielding 528.5 g of product. The product was identified as LiPF₂(C₂O₄)₂·xDMC, with x = 0.484. The product exhibited a purity of 99.7%, an angle of repose of 29°, a bulk density of 1.07 g/ml, and a yield of 90.1%.

### Example 2

3000 g of 1,4-dichlorobutane were added dropwise to the NaDFOP/EC-acetonitrile solution obtained in Preparation Example 2. The mixture was stirred for crystallization at 50°C for 10 hours. The wet crystals were separated and dried under a vacuum of 200 Pa at 50°C, yielding 621 g of product. The product was identified as NaPF₂(C₂O₄)₂·xEC, with x = 1.001. The product exhibited a purity of 99.8%, an angle of repose of 27°, a bulk density of 1.11 g/mL, and a yield of 93.5%.

### Example 3

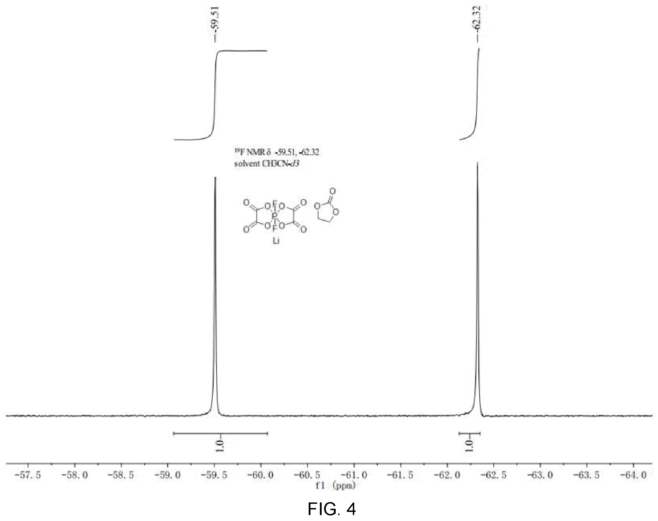

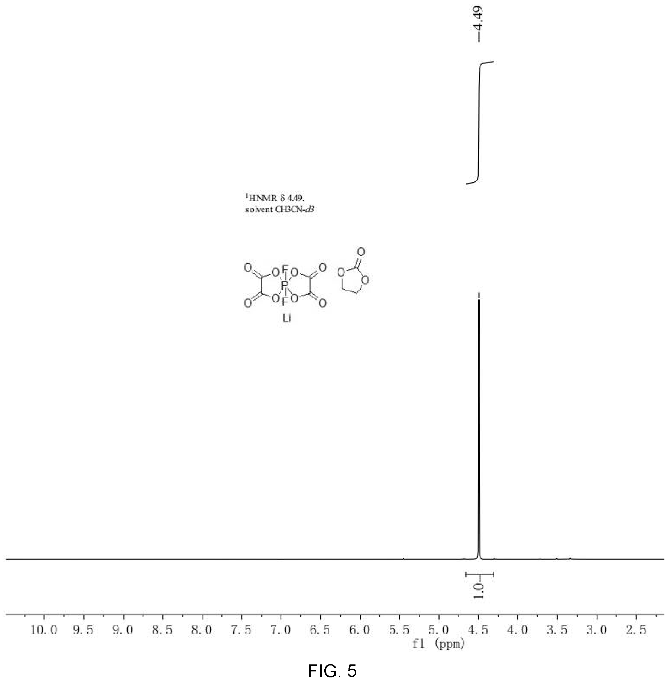

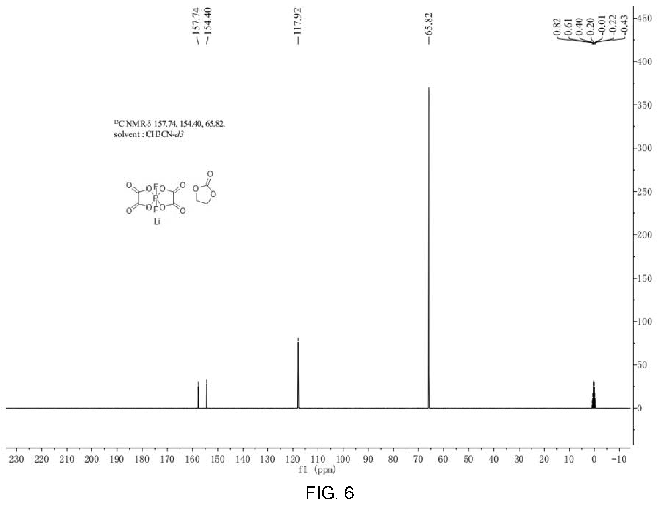

The clarified mixture obtained in Preparation Example 3 was maintained at 45°C, and 1000 g of 1,2,3-trichloropropane was added dropwise under stirring for crystallization for 8 hours. After cooling to 10°C, the precipitated crystals were collected by suction filtration and washed with 200 g of 1,2,3-trichloropropane. The wet cake was cold-filtered to constant weight at room temperature, yielding 168.9 g of product. The product was identified as LiPF₂(C₂O₄)₂·xEC, with x = 1.074. The product exhibited a yield of 97.5%, a purity of 99.5%, an angle of repose of 30°, and a bulk density of 1.21 g/ml. FIGS. 4-6 show the NMR spectra of the product from Example 3.

### Example 4

The clarified mixture obtained in Preparation Example 3 was maintained at 60°C, and 500 g of o-xylene was added dropwise under stirring for crystallization for 1 hour. After cooling to 10°C, the precipitated crystals were collected by suction filtration and washed with 100 g of o-xylene. The wet cake was dried at 40°C to constant weight, yielding 129.7 g of product. The product was identified as LiPF₂(C₂O₄)₂·xEC, with x = 0.114. The product exhibited a yield of 99.0%, a purity of 99.7%, an angle of repose of 29°, and a bulk density of 1.23 g/ml.

### Example 5

The solid-liquid mixture obtained in Preparation Example 4 was concentrated under reduced pressure at 80°C to 300 g. Then, 1000 g of n-hexane was added dropwise at 50°C under stirring for crystallization for 2 hours. After cooling to 30°C, the precipitated crystals were collected by suction filtration and washed with 300 g of n-hexane. The wet cake was cold-filtered to constant weight at room temperature, yielding 280.8 g of product. The product was identified as LiPF₂(C₂O₄)₂·xDMC, with x = 0.355. The product exhibited a yield of 98.9%, a purity of 99.5%, a bulk density of 0.994 g/ml, and an angle of repose of 31°.

### Example 6

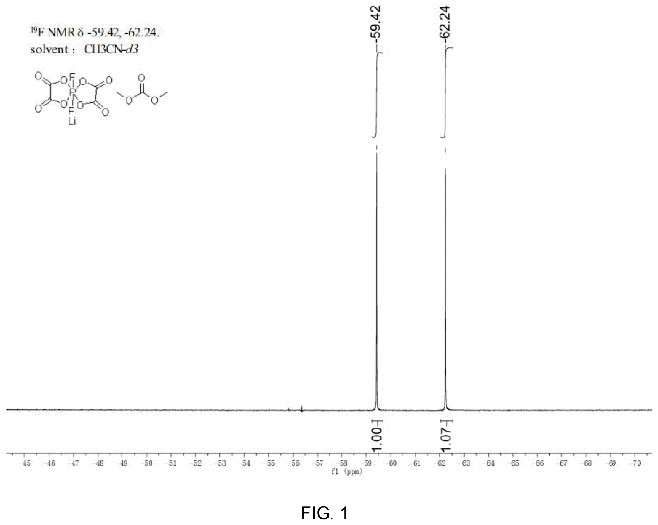

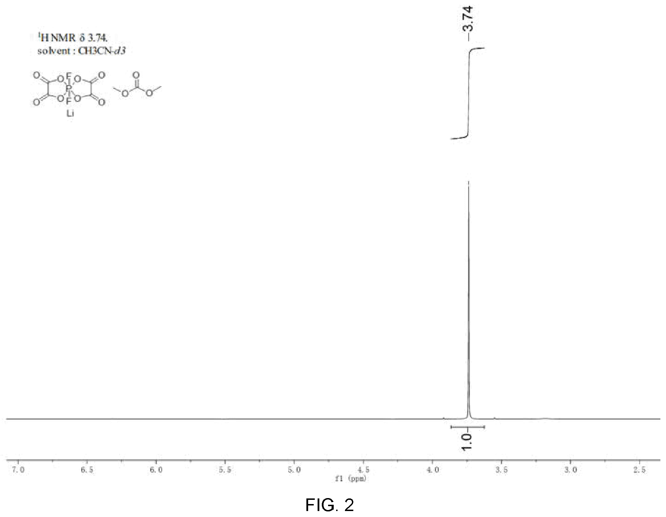

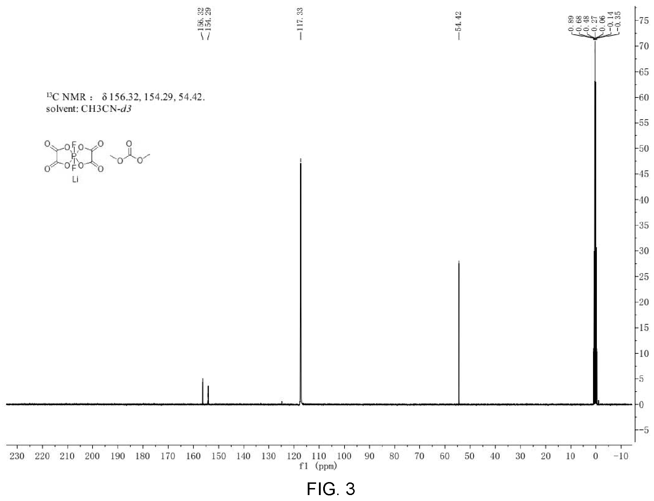

The solid-liquid mixture obtained in Preparation Example 4 was concentrated under reduced pressure at 80°C to 500 g. Then, 1500 g of toluene was added dropwise at 75°C under stirring for crystallization for 12 hours. After cooling to 30°C, the precipitated crystals were collected by suction filtration and washed with 100 g of toluene. The wet cake was cold-filtered to constant weight at room temperature, yielding 324.9 g of product. The product was identified as LiPF₂(C₂O₄)₂·xDMC, with x = 1.002. The product exhibited a yield of 95.0%, a purity of 99.6%, a bulk density of 0.989 g/ml, and an angle of repose of 33°. FIGS. 1-3 show the NMR spectra of the product from Example 6.

### Example 7

The solid-liquid mixture obtained in Preparation Example 5 was concentrated under reduced pressure at 80°C to 550 g. Then, 1000 g of o-xylene were added dropwise at 75°C under stirring for crystallization for 6 hours. After cooling to 30°C, the precipitated crystals were collected by suction filtration and washed with 100 g of o-xylene. The wet cake was cold-filtered to constant weight at room temperature, yielding 328.1 g of product. The product was identified as LiPF₂(C₂O₄)₂·xDMC, with x = 0.714. The product exhibited a yield of 93.5%, a purity of 99.8%, a bulk density of 0.956 g/ml, and an angle of repose of 38°.

### Example 8

The concentrated solution obtained in Preparation Example 6 (500 g) was cooled to 60°C and then 800 g of 1,2-dichloroethane was added dropwise under stirring for crystallization for 4 hours. After cooling to 10°C, the precipitated crystals were collected by suction filtration and washed with 100 g of 1,2-dichloroethane. The wet cake was cold-filtered to constant weight at room temperature, yielding 296.1 g of product. The product was identified as LiPF₂(C₂O₄)₂·xDMC, with x = 0.502. The product exhibited a yield of 95.0%, a purity of 99.6%, a bulk density of 1.02 g/ml, and an angle of repose of 30°.

### Example 9

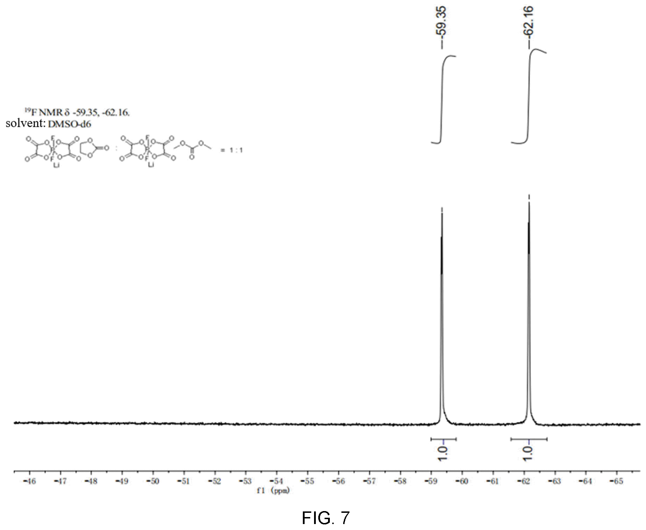

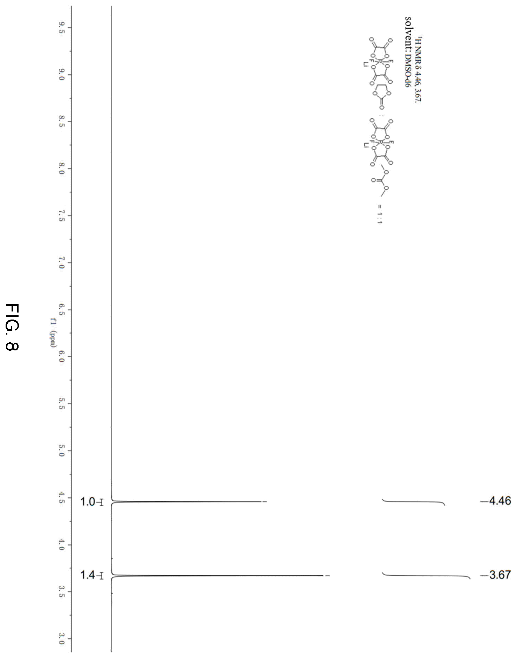

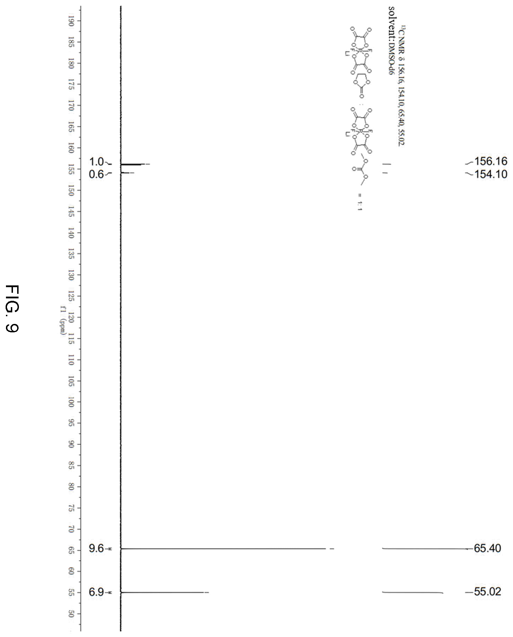

To the mixed LiDFOP/DMC-EC solution obtained in Preparation Example 7, 1000 g of toluene was added dropwise under stirring for crystallization at 60°C for 10 hours. The wet crystals were separated and dried under a vacuum of 500 Pa at 50°C, yielding 636.5 g of product. The product was identified as LiPF₂(C₂O₄)₂·0.501DMC·0.510EC, with x = 1.011. The product exhibited a purity of 99.6%, an angle of repose of 30°, a bulk density of 1.05 g/ml, and a yield of 94.0%. FIGS. 7-9 show the NMR spectra of the product from Example 9.

### Example 10

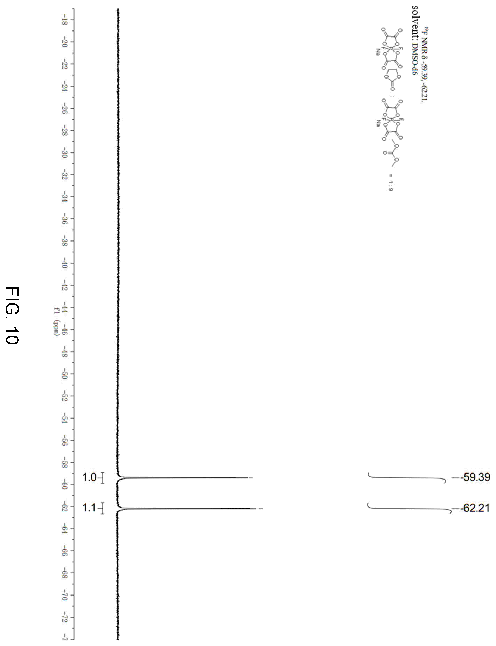

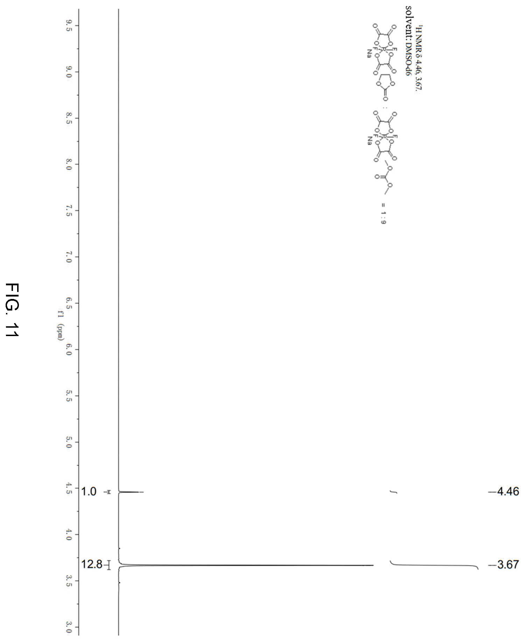

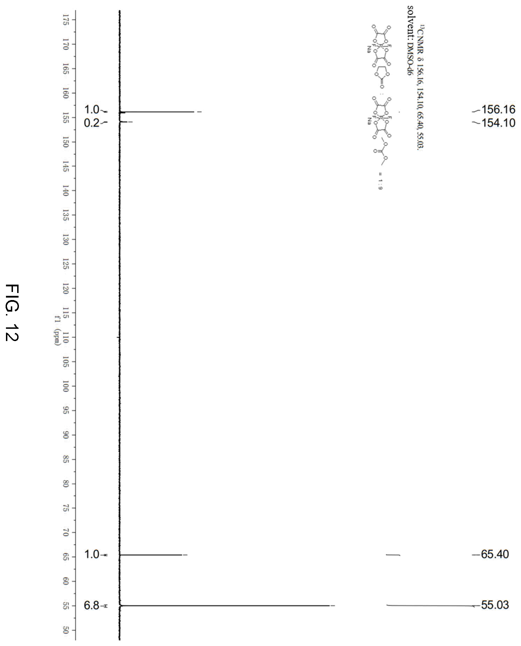

To the mixed NaDFOP/DMC-EC solution obtained in Preparation Example 8, 3000 g of 1,4-dichlorobutane was added dropwise under stirring for crystallization at 40°C for 12 hours. The wet crystals were separated and dried under a vacuum of 200 Pa at 30°C, yielding 616.2 g of product. The product was identified as NaPF₂(C₂O₄)₂·0.889DMC·0.102EC, with x = 0.991. The product exhibited a purity of 99.5%, an angle of repose of 27°, a bulk density of 1.01 g/ml, and a yield of 92.5%. FIGS. 10-12 show the NMR spectra of the product from Example 10.

### Example 11

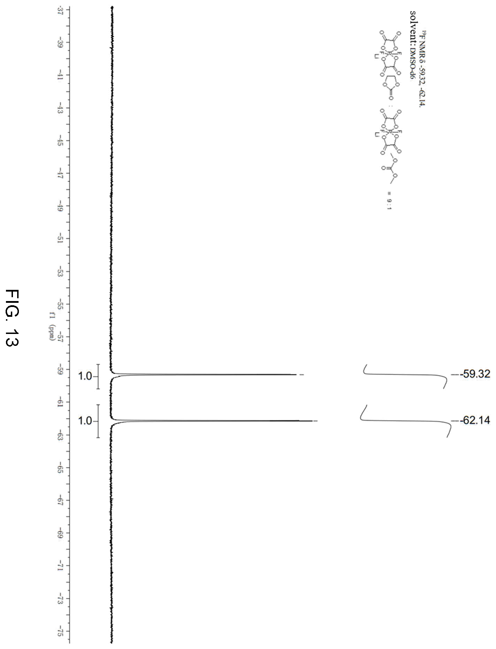

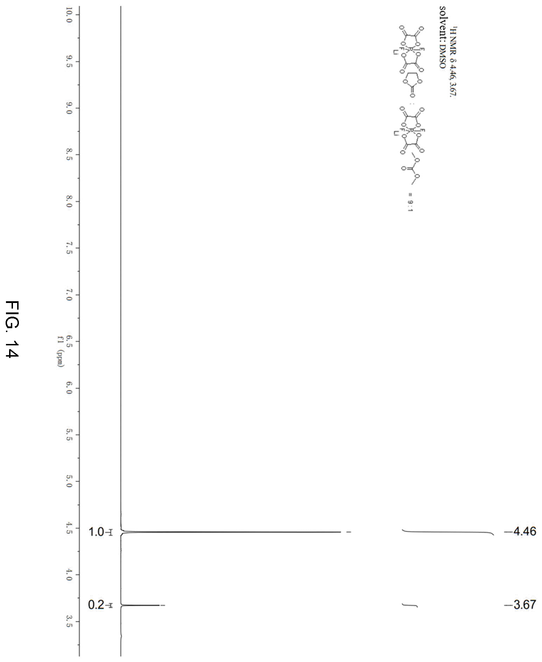

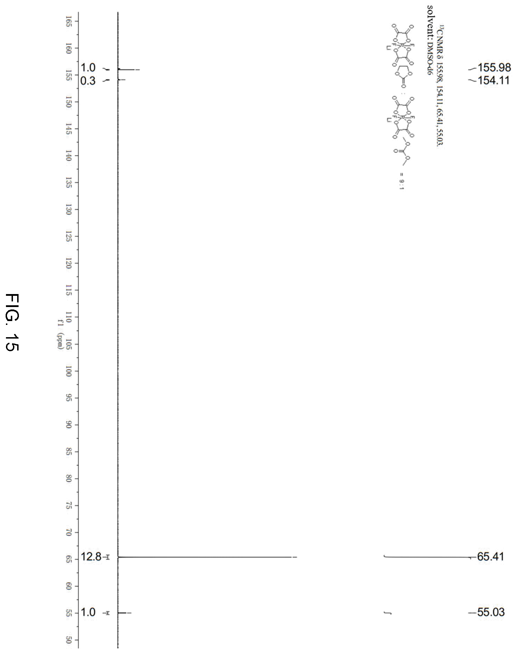

The clarified mixed solution obtained in Preparation Example 9 was maintained at 60°C, and 1500 g of o-xylene was added dropwise under stirring for crystallization for 11 hours. After cooling to 10°C, the precipitated crystals were collected by suction filtration and washed with 100 g of o-xylene. The wet cake was dried at 40°C to constant weight, yielding 161.22 g of product. The product was identified as LiPF₂(C₂O₄)₂·0.112DMC·1.002EC, with x = 1.114. The product exhibited a yield of 92.1%, a purity of 99.2%, an angle of repose of 31°, and a bulk density of 0.996 g/ml. FIGS. 13-15 show the NMR spectra of the product from Example 11.

### Comparative Example 1 (Corresponding to Preparation Example 3)

At room temperature, 76.7g (0.505mol) of lithium hexafluorophosphate solid and 90.05g (1.0mol) of anhydrous oxalic acid were added to 1000g of methyl ethyl carbonate. The mixture was heated to 45°C, and 84.95g (0.5mol) of silicon tetrachloride liquid was added dropwise over 2 hours. The mixture was stirred and maintained at 45-55°C for 4 hours, during which silicon tetrafluoride and hydrogen chloride gases were generated. The reaction system was cooled to room temperature and filtered to remove trace insolubles. The filtrate was concentrated under reduced pressure at 50-80°C to obtain a viscous, translucent solid-liquid mixture. Then, 400g of toluene was added, followed by cooling to room temperature in an ice bath, causing a large amount of white solid to precipitate. The product was transferred to a glove box for filtration and dried under reduced pressure at 70-80°C for 12 hours, yielding 104.1g of white powdery product. The powdery product exhibited a yield of 82.6%, an angle of repose of 52°, a bulk density of 0.566 g/ml, and a purity of 98.8%.

### Comparative Example 2 (Corresponding to Preparation Example 4)

At room temperature, 152g (1.0mol) of lithium hexafluorophosphate solid and 180.1g (2.0mol) of anhydrous oxalic acid were added to 1000g of DMC. The mixture was heated to 50°C, and a solution containing 169.9g (1mol) of silicon tetrachloride liquid and 500g of DMC was added dropwise over 5 hours. The mixture was maintained at 40-50°C and stirred for 6 hours, during which silicon tetrafluoride and hydrogen chloride gases were generated. ¹⁹F NMR analysis was performed to determine whether lithium hexafluorophosphate in the reaction system had completely reacted. The reaction system was cooled to room temperature and filtered to remove trace insolubles. The filtrate was concentrated under reduced pressure at 80°C to a viscous, translucent solid-liquid mixture. 800g of dichloroethane was added all at once, followed by cooling to room temperature in an ice bath, causing a large amount of white solid to precipitate. The white solid was transferred to a glove box for filtration, and was dried under reduced pressure at 70-80°C for 6 hours, yielding 200.3g of white powdery product. The powdery product exhibited a yield of 79.5%, a purity of 95.9%, an angle of repose of 49°, and a bulk density of 0.690 g/ml..

### Comparative Example 3 (Corresponding to Preparation Example 6)

Under a nitrogen atmosphere, 1mol of lithium tris(oxalato)phosphate and 1.1mol of lithium tetrafluoro(oxalato)phosphate were added to 2000g of DMC and mixed for dissolution. The reaction was carried out under heating to 120°C for 5 hours to obtain a LiDFOP solution. The LiDFOP solution was then cooled to room temperature, and the insolubles were filtered out. The filtrate was concentrated under reduced pressure to a volume of 500g. 800g of dichloroethane was added dropwise to induce crystallization, followed by cooling to room temperature, causing a large amount of white solid to precipitate. The white solid was transferred to a glove box for filtration and washed with 100g of dichloroethane. The wet cake was dried under reduced pressure at 5 kPa and 90°C for 4 hours, yielding a white powdery LiDFOP product. The powdery product exhibited a yield of 85%, a purity of 95.8%, an angle of repose of 50°, and a bulk density of 0.701 g/ml..

### Comparative Example 4

At room temperature, 76.7g (0.505mol) of lithium hexafluorophosphate solid and 90.05g (1.0mol) of anhydrous oxalic acid were added to 1000g of methyl ethyl carbonate. The mixture was heated to 45°C, and 84.95g (0.5mol) of silicon tetrachloride liquid was added dropwise over 2 hours. The mixture was stirred and maintained at 45-55°C for 4 hours, during which silicon tetrafluoride and hydrogen chloride gases were generated. The reaction system was cooled to room temperature and filtered to remove trace insolubles. The filtrate was concentrated under reduced pressure at 50-80°C to obtain a viscous, translucent solid-liquid mixture. Then, 400g of toluene was added, followed by cooling to room temperature in an ice bath and stirring for crystallization for 20 min, causing a large amount of white solid to precipitate. The white solid was transferred to a glove box for filtration and dried under reduced pressure at 70-80°C for 12 hours, yielding 105.8g of white powdery LiDFOP product. The powdery product exhibited a yield of 84.0%, an angle of repose of 53°, a bulk density of 0.570 g/ml, and a purity of 98.6%.

### Comparative Example 5

At room temperature, 152g (1.0mol) of lithium hexafluorophosphate solid and 180.1g (2.0mol) of anhydrous oxalic acid were added to 1000g of DMC. The mixture was heated to 50°C, and a solution containing 169.9g (1mol) of silicon tetrachloride liquid and 500g of DMC was added dropwise over 5 hours, followed by holding at 40-50°C and stirring for 6 hours, during which silicon tetrafluoride and hydrogen chloride gases were generated. ¹⁹F NMR analysis was performed to determine whether lithium hexafluorophosphate in the reaction system had completely reacted. The reaction system was cooled to room temperature and filtered to remove trace insolubles. The filtrate was concentrated under reduced pressure at 80°C to obtain a viscous, translucent solid-liquid mixture. 800g of dichloroethane was added all at once, followed by cooling to room temperature in an ice bath and stirring for crystallization for 30 min, causing a large amount of white solid to precipitate. The white solid was transferred to a glove box for filtration, and was dried under reduced pressure at 70-80°C for 6 hours, yielding 204.8g of white powdery LiDFOP product. The powdery product exhibited a yield of 81.3%, a purity of 95.6%, an angle of repose of 50°, and a bulk density of 0.695 g/ml.

### Comparative Example 6

Under a nitrogen atmosphere, 1mol of lithium tris(oxalato)phosphate and 1.1mol of lithium tetrafluoro(oxalato)phosphate were added to 2000g of DMC and mixed for dissolution. The mixture was heated to 120 °C and maintained at this temperature for 5 hours for reaction, to obtain a LiDFOP solution. The LiDFOP solution was then cooled to room temperature, and the insolubles were filtered out. The filtrate was concentrated under reduced pressure to 500g. 80g of dichloroethane was added dropwise to induce crystallization, followed by cooling to room temperature and stirring for 40 minutes, causing a large amount of white solid to precipitate. The white solid was transferred to a glove box for filtration and washed with 100g of dichloroethane. The wet cake was dried under reduced pressure at 5 kPa, 90°C for 4 hours, yielding 433.9g of white powdery LiDFOP product. The powdery product exhibited a yield of 86%, a purity of 96.5%, an angle of repose of 51°, and a bulk density of 0.703 g/ml.

Based on a comparison between Comparative Examples 1-3 and Examples 3-8, it can be found that when the poor solvent was added without stirring, a large amount of crystals precipitated, such that the composition could not be obtained. In addition, both the yield and purity of the product were reduced, and the product exhibited a lower bulk density and a higher angle of repose, indicating poor flowability.

Based on a comparison between Comparative Examples 4-6 and Examples 3-8, it can be found that when the poor solvent was added and the stirring time was less than 1 hour, the composition likewise could not be obtained. The resulting product exhibited low yield and purity, along with a lower bulk density and a higher angle of repose, indicating poor flowability.

### Analysis Methods:

Moisture content: Coulometric Karl Fischer Titrator (Metrohm 831);
Coordination Ratio: The solvent content was quantitatively determined by gas chromatography, and the measured mass content was then converted to molar amount. GC analysis was carried out on a Shimadzu GC-2010 Pro equipped with an HP-5 capillary column (30 m × 0.32 mm × 0.25 µm).
Purity, Impurities: Ion chromatography (Thermo Fisher Aquion) with an SH-AC-4 column (250mm × 4.6mm) and an SH-AG-4 guard column (50mm × 4.6mm);
Bulk Density: 50g of sample was placed in a graduated cylinder, compacted 100 times, and the resulted volume was measured to calculate the corresponding density;
Angle of Repose: XF-4324 Powder Angle-of-repose Tester, Xiamen Xiongfa Instruments Co., Ltd.

The above descriptions represent preferred embodiments of the present disclosure and are not intended to limit the scope of the present disclosure. It should be understood that those skilled in the art, without departing from the technical principles of the present disclosure, can make various improvements and additions. These improvements and additions are intended to fall within the scope of the present disclosure. Any modifications, refinements, or equivalent changes made based on the disclosed technical content without deviating from the scope of the present disclosure are considered equivalent embodiments of the present disclosure. Additionally, any equivalent variations or modifications made based on the technical substance of the present disclosure, even if not explicitly stated, are still within the scope of the present disclosure.

## Claims

1. A difluorobis(oxalato)phosphate salt composition, wherein the chemical formula of the difluorobis(oxalato)phosphate salt composition is MPF₂(C₂O₄)₂·xB, wherein M is an alkali metal, B is an organic solvent, x is a molar ratio of the organic solvent B to the difluorobis(oxalato)phosphate salt, and 0.05 < x < 1.1.

2. The difluorobis(oxalato)phosphate salt composition according to claim 1, further comprising one or more of the following:
a1) M is Li or Na;
a2) B is one or more of dimethyl carbonate (DMC) and ethylene carbonate (EC); and
a3) 0.5 ≤ x ≤ 1.

3. The difluorobis(oxalato)phosphate salt composition according to claim 1 or 2, wherein the chemical formula of the difluorobis(oxalato)phosphate salt composition is MPF₂(C₂O₄)₂·x(DMC/EC), wherein DMC is dimethyl carbonate, and EC is ethylene carbonate.

4. The difluorobis(oxalato)phosphate salt composition according to claim 1 or 2, wherein the chemical formula of the difluorobis(oxalato)phosphate salt composition is LiPF₂(C₂O₄)₂·xDMC, LiPF₂(C₂O₄)₂·xEC, NaPF₂(C₂O₄)₂·xDMC, or NaPF₂(C₂O₄)₂·xEC; wherein DMC is dimethyl carbonate, and EC is ethylene carbonate.

5. The difluorobis(oxalato)phosphate salt composition according to claim 4, wherein 0.3 < x < 1.1.

6. The difluorobis(oxalato)phosphate salt composition according to claim 5, wherein 0.5 ≤ x ≤ 1.

7. A method for preparing the difluorobis(oxalato)phosphate salt composition according to any one of claims 1 to 6, comprising: adding a poor solvent to a mixture of a difluorobis(oxalato)phosphate salt and an organic solvent to induce crystallization, followed by filtering to obtain a filter cake, and then drying the filter cake to yield the difluorobis(oxalato)phosphate salt composition.

8. The method according to claim 7, further comprising one or more of the following:
b1) the mixture of the difluorobis(oxalato)phosphate salt and the organic solvent is obtained by combining the difluorobis(oxalato)phosphate salt and the organic solvent; and
b2) the mixture of the difluorobis(oxalato)phosphate salt and the organic solvent is obtained during a preparation of the difluorobis(oxalato)phosphate salt.

9. The method according to claim 7 or 8, further comprising one or more of the following:
c1) a mass ratio of the organic solvent to the difluorobis(oxalato)phosphate salt in the mixture of the difluorobis(oxalato)phosphate salt and the organic solvent is 1:(1-5);
c2) a mass ratio of the difluorobis(oxalato)phosphate salt to the poor solvent is 1:(1-10);
c3) a crystallization temperature ranges from 10°C to 75°C;
c4) the difluorobis(oxalato)phosphate salt is lithium difluorobis(oxalato)phosphate or sodium difluorobis(oxalato)phosphate;
c5) the organic solvent comprises one or more of DMC, EC, and an additional solvent, wherein the organic solvent comprises at least DMC or EC; and the additional solvent is one or more of methyl ethyl carbonate, diethyl carbonate, propylene carbonate, acetonitrile, tetrahydrofuran, ethylene glycol dimethyl ether, diethylene glycol dimethyl ether, diethylene glycol diethyl ether, and dioxane;
c6) the poor solvent is a hydrocarbon solvent and/or a halogenated hydrocarbon solvent;
c7) the drying is performed by heating under vacuum; and
c8) when adding the poor solvent, the poor solvent is added dropwise under stirring, and a stirring time ranges from 1 to 12 hours.

10. The method according to claim 9, further comprising one or more of the following:
c51) in c5), the organic solvent comprises DMC and/or EC;
c61) in c6), the hydrocarbon solvent is one or more of n-hexane, cyclohexane, n-heptane, n-octane, petroleum ether, toluene, and xylene;
c62) in c6), the halogenated hydrocarbon solvent is one or more of dichloromethane, trichloromethane, 1,2-dichloroethane, 1,1,1-trichloroethane, 1,1,2-trichloroethane, 1,2,3-trichloropropane, 1,1,2,2-tetrachloroethane, 1,4-dichlorobutane, and 1,1,2,2-tetrachloroethylene;
c71) in c7), a heating temperature under vacuum ranges from 20°C to 90°C; and
c72) in c7), the heating is carried out under a pressure ranging from 0 Pa to 20000 Pa.

11. The method according to claim 9, wherein in c7), a heating temperature under vacuum ranges from 20°C to 50°C.

12. The method according to claim 10, further comprising one or more of the following:
c611) in c61), the hydrocarbon solvent is one or more of petroleum ether, n-hexane, toluene, and o-xylene;
c621) in c62), the halogenated hydrocarbon solvent is one or more of 1,4-dichlorobutane, 1,2,3-trichloropropane, and 1,2-dichloroethane;
c711) in c71), the heating temperature under vacuum ranges from 30°C to 50°C; and
c721) in c72), the heating is carried out under the pressure ranging from 0 Pa to 10000 Pa.

13. A use of the difluorobis(oxalato)phosphate salt composition according to any one of claims 1 to 6 in an electrolyte.

14. A use of the difluorobis(oxalato)phosphate salt composition according to any one of claims 1 to 6 in a battery.
